# EUROPÄISCHE PATENTSCHRIFT

(11) **EP 0 940 272 B1**
(45) Veröffentlichungstag und Bekanntmachung des Hinweises auf die Patenterteilung: **28.08.2002**
(21) Anmeldenummer: 99101605.6
(22) Anmeldetag: 03.02.1999
(51) Int. Cl.: B60G 9/00, B62D 33/067, B60K 11/04, B62D 21/09, B62D 21/12

(54) **Fahrgestell eines Frontlenker-Lastkraftwagen**
Chassis for a cab-over-engine lorry
Chassis pour un camion à cabine avancée

(30) Priorität: 04.03.1998 DE 19809209
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ulrich, Dr.-Ing., 81245 München (DE); Nickels, Thomas, 81541 München (DE); Hintereder, Jürgen, Dipl.Ing. (FH), 85586 Poing (DE); Neukam, Michael, Dipl.-Ing. (TU), 82110 Germering (DE); Lutsch, Helmar, Dipl.-Ing., 81927 München (DE)

(56) Entgegenhaltungen:
- DE-A- 4 006 418
- DE-A- 19 637 920
- US-A- 5 641 181

## Beschreibung

Die Erfindung betrifft ein Fahrgestell eines Frontlenker-Lastkraftwagen mit kippbarem Fahrerhaus und Merkmalen, wie im Oberbegriff des Anspruchs 1 angegeben.

Als Stand der Technik, von dem die Erfindung ausgeht, wird die DE 196 37 920 A1 genannt. Aus dieser Schrift geht ein Zusatzfahrgestellteil hervor, das als Guß- oder Schmiedeteil hergestellt ist und am vorderen Ende eines Rahmenlängsträgers übergestülpt, dieses also vorn, außen, oben, unten und innen übergreifend, angebaut und mittels einer größeren Anzahl von Schrauben befestigt ist. Desweiteren soll dieses Zusatzfahrgestellteil zur Befestigung mehrerer Fahrzeugkomponenten herangezogen werden, wofür entsprechende Verankerungspunkte an ihm vorgesehen sind. Als solche Fahrzeugteile sind genannt das Fahrzeuglenksystem, das Kühlsystem, die vordere Fahrerhauslagerung, eine Fahrerhauskippbegrenzungseinrichtung, eine Gangwählvorrichtung, ein Stoßfänger, ein Abschleppbolzen.

Der Erfindung liegt die Aufgabe zugrunde, das Fahrgestell eines Frontlenker-Lastkraftwagen in dessen vorderen Bereich so zu gestalten, daß zwischen dessen beide Längsträger ein Antriebsaggregat samt räumlich vorgeordnetem Kühler-/Lüfter-Aggregat möglichst tiefliegend eingebaut werden kann, die Stabilität des Rahmens trotzdem gesichert ist und außerdem die Anzahl der Bauteile, die für den Anbau der im vorderen Fahrgestellbereich vorgesehenen Fahrzeugteile notwendig sind, auf einige wenige reduziert wird.

Diese Aufgabe ist bei einem Fahrgestell der gattungsgemäßen Art erfindungsgemäß durch die im Anspruch gekennzeichneten Merkmale gelöst.

Vorteilhafte Ausgestaltungen dieser Lösung sind in den Unteransprüchen angegeben.

Durch die erfindungsgemäße U-förmige Bauart des vorderendigen Querträgers ist zum einen eine hohe Rahmenstabilität am vorderen Fahrgestellbereich und zum anderen ein großer freier Einbauraum für das Antriebsaggregat samt vorgeordnetem Kühler-Lüfter-Aggregat gegeben.

Im Gegensatz zu den sogenannten Zusatzfahrgestellteilen gemäß der DE 196 37 920 A1 stellen die erfindungsgemäß zusammen mit einer Quertraverse den vorderendigen Querträger bildenden Multifunktionslagerschilde ein Optimum an Konzentrierung von Anlenk-, Abstütz-, und Befestigungsteilen für den Anbau einer Vielzahl von Fahrzeugteilen dar. Ganz wesentlich ist dabei, daß hierzu auch die Anlenkung der Vorderachse über deren Längslenker oder Blattfedern gehört, ohne daß dieses den gewünscht tiefliegenden Einbau des Antriebsaggregates behindert. Das Versehen der beiden Multifunktionslagerschilde für den Anbau einer größtmöglichen Anzahl von Fahrzeugteilen reduziert ersichtlicher Weise die Montagezeit und die Herstellkosten, aber auch die Kosten und den Raum für die Lager- und Ersatzteilvorhaltung.

Nachstehend ist die erfindungsgemäße Lösung anhand der Zeichnung und darin aufgezeigter Beispiele in Verbindung mit einer neuartigen Bauart, Aufhängung und Federung der Vorderachse näher erläutert. In der Zeichnung zeigen:

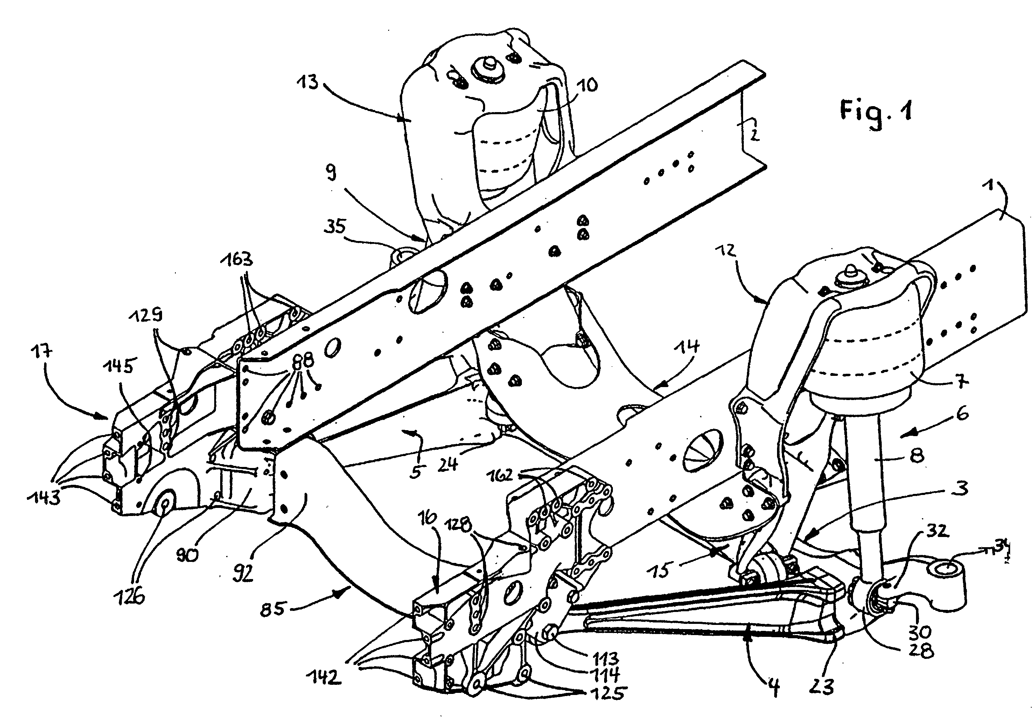

- Fig. 1: perspektivisch den vorderen Endbereich des Fahrgestells eines Frontlenker-Lastkraftwagen mit Vorderachse (ohne Räder) und erfindungsgemäßem vorderendigen Querträger ohne weitere Anbauteile,

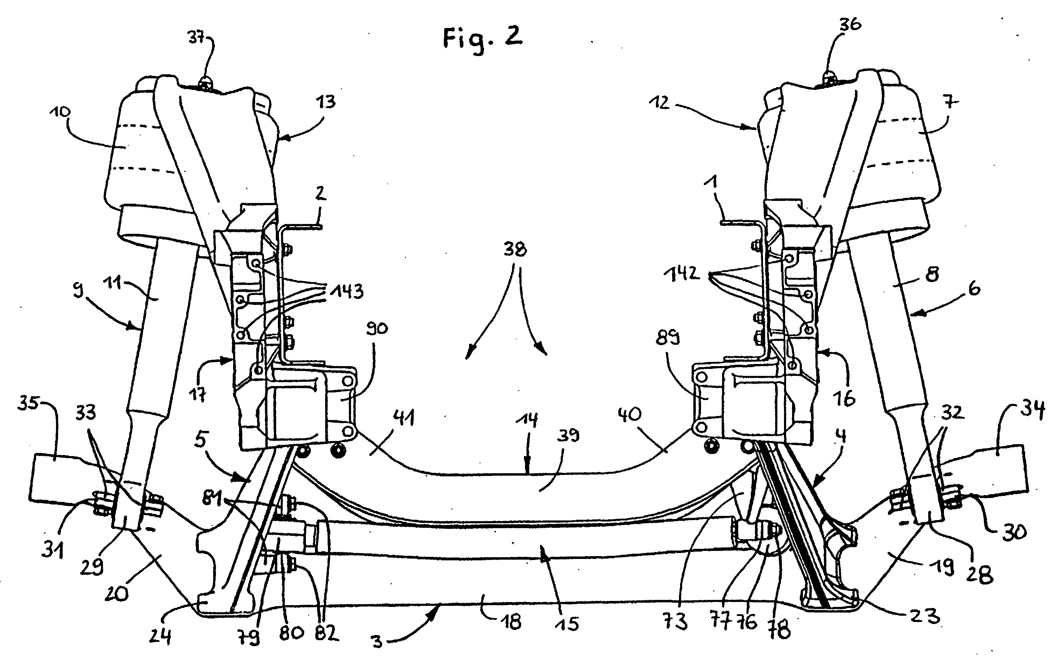

- Fig. 2: in Vorderansicht den Fahrgestellbereich gemäß Fig. 1 ohne die Quertraverse des erfindungsgemäßen vorderendigen Querträgers,

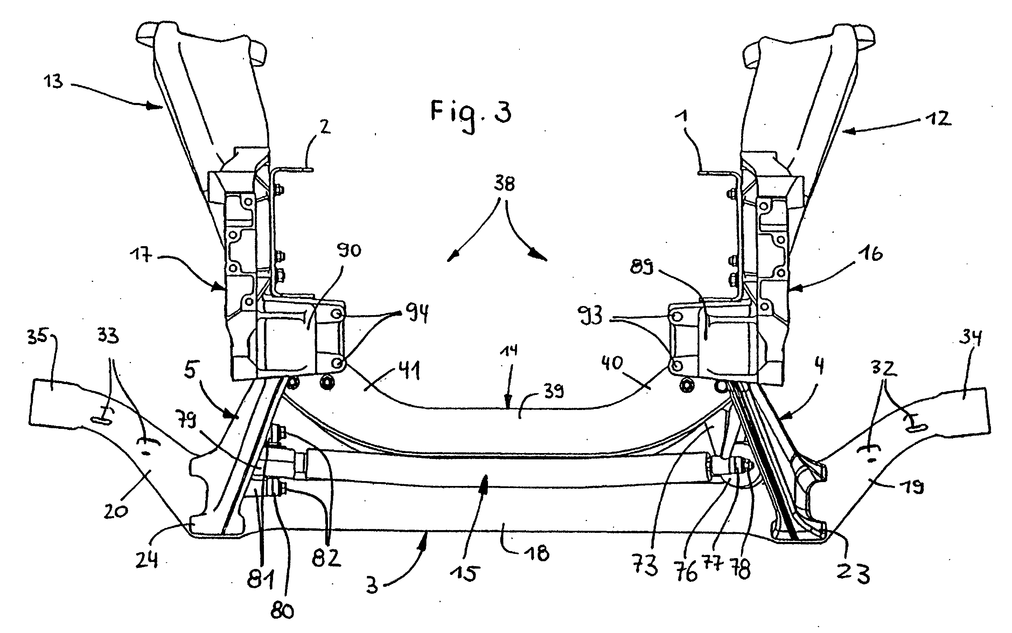

- Fig. 3: die Darstellung gemäß Fig. 2 ohne Federbeine,

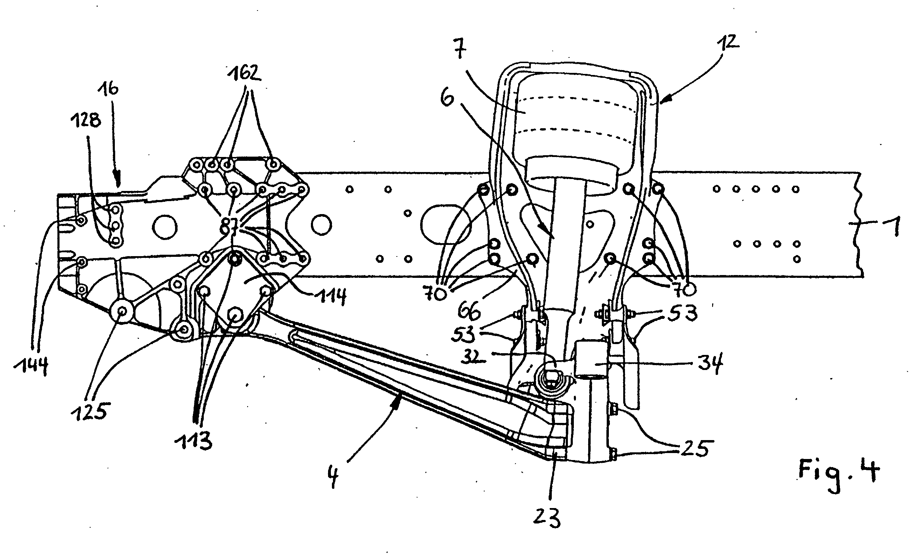

- Fig. 4: in Seitenansicht den Fahrgestell-Bereich gemäß Fig. 1,

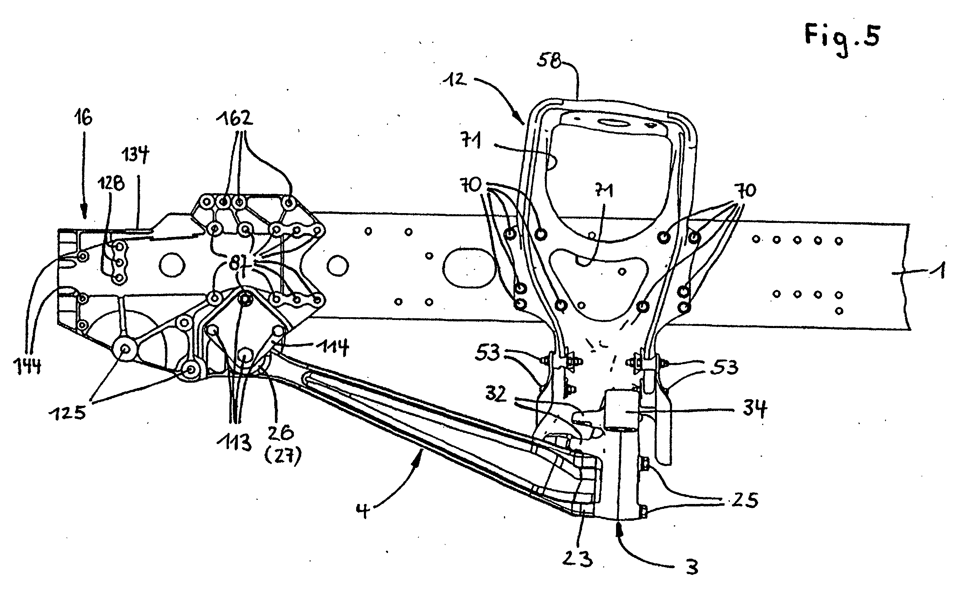

- Fig. 5: die Darstellung gemäß Fig. 4 ohne Federbeine,

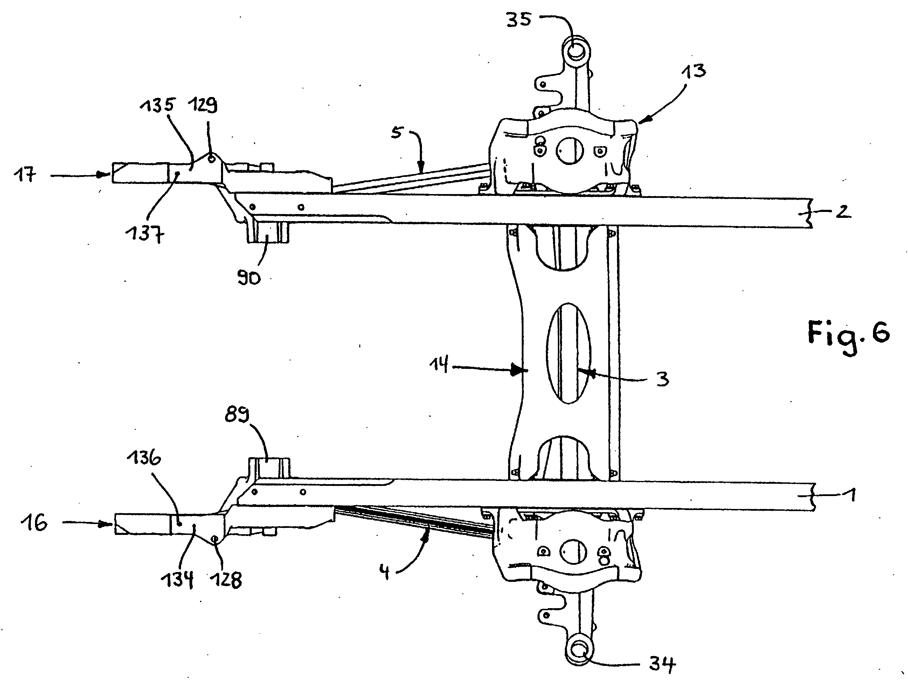

- Fig. 6: in Draufsicht den Fahrgestell-Bereich gemäß Fig. 1 ohne die Quertraverse des vorderendigen Querträgers und ohne Federbeine,
- Fig. 7: in Vorderansicht den im Bereich der Vorderachse gegebenen Querträger,
- Fig. 8: den Querträger gemäß Fig. 7 in perspektivischer Ansicht, und

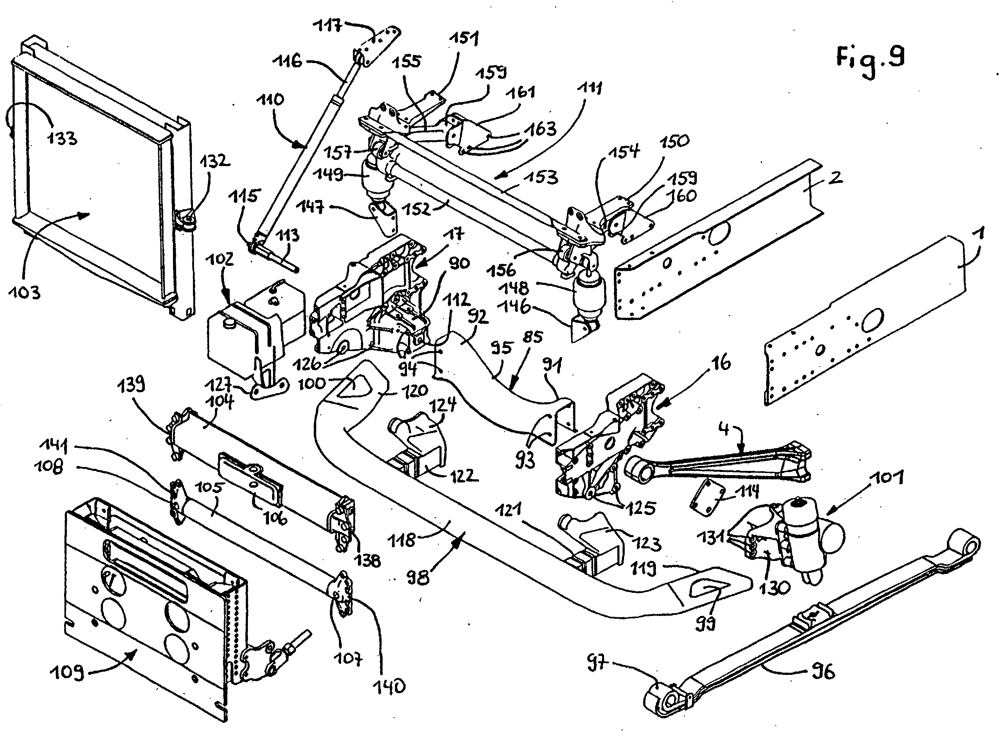

- Fig. 9: in perspektivischer Darstellung die Einzelteile des erfindungsgemäßen vorderendigen Querträgers und einer (nicht vollständigen) Anzahl von daran anzubauenden Fahrzeugteilen.

Das erfindungsgemäße Fahrgestell ist Bestandteil eines, insbesondere schweren, Lastkraftwagen der Frontlenkerbauart mit kippbarem Fahrerhaus und weiteren Anund Aufbauten der verschiedensten Art, auch solche für Spezialeinsatzzwecke. Die erfindungsgemäße Lösung ist nachfolgend in Verbindung mit einer ebenfalls neuartigen, selbststabilisierenden Verbundlenker-Vorderachse beschrieben. In der Zeichnung sind von dem Fahrgestell nur dessen für das Verständnis der Erfindung erforderlicher vorderer Bereich dargestellt Als Teile von dessen Rahmen sind die beiden Längsträger mit 1 und 2 bezeichnet.

Zunächst sei auf die Merkmale der selbststabilisierenden Verbundlenker-Vorderachse näher eingegangen. Diese besteht einschließlich aller Aufhängungs-, Federungs- und Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem Panhardstab 15 und einem - von vorne gesehen - U-förmigen Querträger 38, der sich aus einem linken Federbeinhalter 12, einem rechten Federbeinhalter 13 und einer Quertraverse 14 zusammensetzt.

Die Verbundlenker-Vorderachse ist grundsätzlich derart konstruiert, daß zu ihrer Querführung nur der Panhardstab 15 notwendig ist und sie ohne den bisher bei schweren Lastkraftwagen zur Beschränkung des Wankens notwendigen U-förmigen Stabilisator auskommt, aber dessen Funktion einem aus dem Starrachskörper 3 und den beiden Längslenkern 4, 5 zusammengesetzten Bauteilverbund aufgeprägt ist Dieser Zweckbestimmung und Funktion gehorchend ist der Starrachskörper 3 in einem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt - nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torisionsfähigkeit auf den jeweiligen fahrzeugspezifischen Anwendungsfall abgestimmt. Am Übergangsbereich zwischen geradem Mittelbereich 18 und jedem beiderseits desselben anschließenden, im dargestellten Beispiel hochgekröpften Endabschnitt 19 bzw. 20 ist stirnseitig vorne am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinen achskörperseitigen Fuß 23 bzw. 24 kraftschlüssig und gegebenenfalls auch noch formschlüssig angeflanscht ist Die Anlagefläche 21 bzw. 22 erstreckt sich dabei mit großer Breite vorzugsweise über die ganze am Starr-achskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Wie der Starrachskörper 3 sind auch die beiden Längslenker 4, 5 in die Stabilisatorfunktion eingebunden und dementsprechend ausgebildet. Die beiden jeweils als Gußteil, gegebenenfalls auch Schmiedeteil hergestellten und anschließend an bestimmten Stellen spanabhebend nach- bzw. endbearbeiteten Längslenker 4, 5 sind demzufolge in der Vertikalen vergleichsweise biegesteif, um ihre Längsachse aber begrenzt tordierbar ausgebildet. Generell sind die beiden Längslenker 4, 5 hinsichtlich ihrer Biegesteifigkeit und Torisionsfähigkeit auf den Gesamtstabilisierungseffekt in Verbindung mit dem torisionsfähigen Starrachskörper 3 abgestimmt, und zwar über entsprechende Bemessung und Formgebung ihrer Querschnitte. Im dargestellten Beispiel weist jeder der beiden gleich langen Längslenker 4, 5 zwischen seinem Fuß 23 bzw. 24 und einem andernendes vorhandenen Lagerauge 26 bzw. 27 einen stabförmigen Bereich mit einem sich über die Länge größenmäßig ändernden, zu dem Lagerauge 26 bzw. 27 hin kleiner werdenden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie an rahmenfesten Lagerstellen angelenkt sind, kleiner ist als der Abstand ihrer achskörperseitigen Füße 23 bzw. 24. Wenn die Verbundlenker-Vorderachse im Fahrgestell eingebaut ist, verlaufen die beiden Längslenker 4, 5 - von der Seite her betrachtet - vom Starrachskörper 3 ausgehend schräg nach oben gerichtet zu den rahmenseitigen Lagerstellen hin.

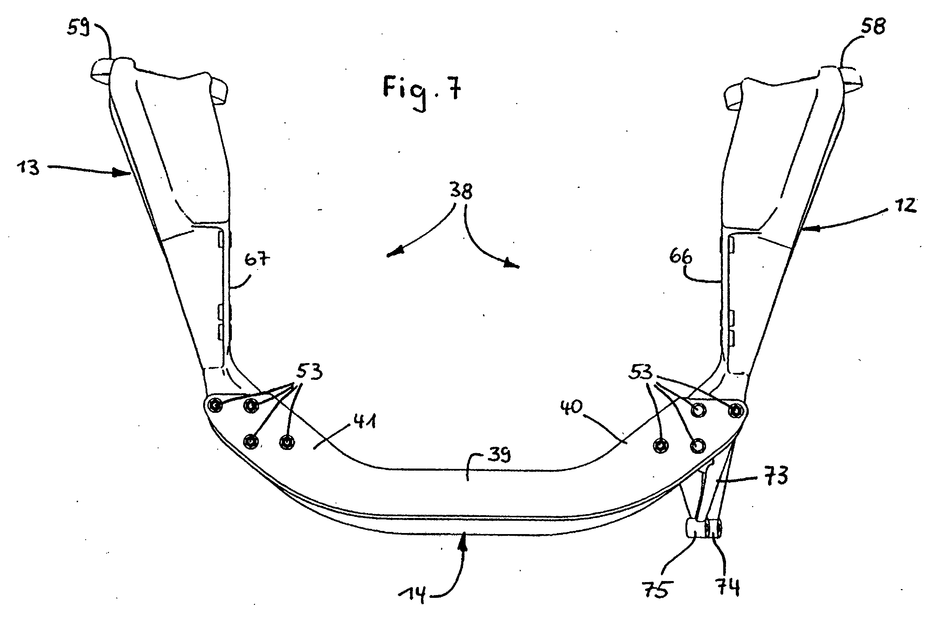

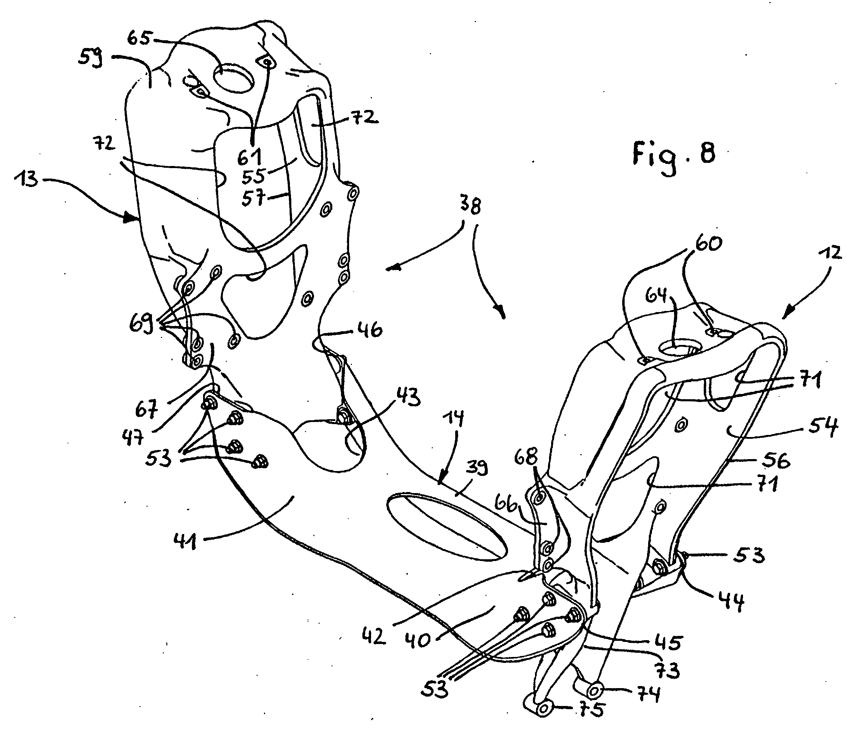

Diese Verbundlenker-Vorderachse garantiert deswegen einen bisher noch nie in einem Lastkraftwagen dargestellten Fahr- und Federungskomfort, weil an ihr die größtmögliche Federspur festgelegt ist. Das heißt, jedes der beiden Federbeine 6 bzw. 9 ist an seinem unteren Ende z. B. über ein in ein dortiges Lagerauge 28 bzw. 29 eingebautes Pratzengelenk 30 bzw. 31 an einer achskörperfesten Lagerstelle angelenkt, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und jeweils durch einen am Starrachskörper 3 angebauten oder mitangeformten maulartigen Bock 32 bzw. 33 gebildet ist. Zu diesem hohen Fahr- und Federungskomfort trägt auch bei, daß die beiden Federbeine 6 bzw. 9 - von vorne gesehen - gepfeilt zueinander eingebaut sind, derart, daß ihre oberen Enden 36 bzw. 37 weniger weit voneinander beabstandet sind als ihre untenendigen Lageraugen 28 bzw. 29. Von der Seite her gesehen steht jedes Federbein 6 bzw. 9 entweder vertikal oder leicht nach vom oder hinten geneigt. Mit seinem oberen Ende 36 bzw. 37 ist jedes Federbein 6 bzw. 9 räumlich oberhalb und seitlich außerhalb des benachbarten Rahmen-Längsträgers 1 bzw. 2 an einem der beiden Federbeinhalter 12 bzw. 13 abgestützt und befestigt. Wie gut aus Fig. 7 und 8 ersichtlich, bilden die beiden Federbeinhalter 12 bzw. 13 zusammen mit der Quertraverse 14 den U-förmigen Querträger 38, der mit seiner Quertraverse 14 den Starrachskörper 3 und den Panhardstab 15 oben mit geringem Abstand überbrückt und außerdem die beiden Rahmen-Längsträger 1, 2 stabilisierend miteinander verbindet Diese Art von Querträger erlaubt einen ungehinderten Einbau eines Antriebsaggregates.

Innerhalb des Querträgers 38 ist die Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen schräg hochgezogenen Endabschnitt 40 bzw. 41 aufweist. Dessen äußere Enden sind nach Art eines Maules ausgebildet, mit dem der anzuschließende Federbeinhalter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vorn und hinten zugehörige Anlageflächen zugeordnet sind. Im Bereich dieser Anlageflächen ist die Quertraverse 14 mit ihren Wangen 44, 45 bzw. 46, 47 abgestützt und dort durch entsprechende Bohrungen bzw. Löcher durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchern 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Einem der beiden Federbeinhalter 12 bzw. 13 ist über seine eigentliche Funktion hinaus eine weitere Funktion aufgeprägt, nämlich jene, das Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 z. B. über ein in sein einenendiges Lagerauge 76 eingebautes Pratzengelenk 77 abgestützt und mittels Schrauben 78 befestigt ist.

Mit seinem anderen, gegenüberliegenden Ende ist der Panhardstab 15 z. B. über ein in das dortige Lagerauge 79 eingebautes Pratzengelenk 80 an geeigneter Stelle des Starrachskörper-Längslenker-Verbundes angelenkt. Für den Fall der Anlenkung am Starrachskörper 3 ist an diesem ein Anschlußbock befestigt oder mitangeformt, an dem eine entsprechende Anlagefläche und Gewindebohrungen für die Anschraubung des Pratzengelenkes 80 angearbeitet sind. Im dargestellten Beispiel ist als Anlenkstelle einer der beiden Längslenker 4 bzw. 5 gewählt. Demzufolge ist an diesem ein seitlich nach innen vorspringender maulartiger Lagerbock 81 befestigt oder - wie dargestellt - mitangeformt, der eine äußere stimseitige Anlagefläche und zwei interne Sackgewindelöcher für die Abstützung des Pratzengelenkes 80 und dessen Befestigung mittels Schrauben 82 aufweist. Der als im wesentlichen gerader Stab mit den endseitig angeschmiedeten Lageraugen 76, 79 ausgebildete Panhardstab 15 erstreckt sich aufgrund seiner wie vorstehend beschriebenen Anlenkung annähernd parallel oder leicht schräg zum Mittelbereich 18 des Starrachskörpers 3 verlaufend.

Am Starrachskörper-Längslenker-Verbund ist je Achsseite eine Ansetzstelle für einen Wagenheber vorgesehen. Diese Ansetzstellen können entweder am Starrachskörper 3 oder den Längslenkern 4, 5 durch mitangeformte oder angebaute Böcke realisiert sein.

Nachfolgend ist auf den erfindungsgemäßen Teil des Fahrgestells näher eingegangen. Dieser besteht aus drei Hauptteilen, nämlich einem linken Multifunktionslagerschild 16, einem rechten Multifunktionslagerschild 17 und einer Quertraverse 85 dazwischen. Diese drei Teile 16, 17, 85 bilden einen- von vorne gesehen - im wesentlichen U-förmigen Querträger 86, der die beiden Rahmen-Längsträger 1, 2 an deren vorderen Enden miteinander verbindet. Die beiden Multifunktionslagerschilde 16, 17 sind jeweils durch ein Guß- oder Schmiedeteil dargestellt, das nach dem Ausformen an einer Vielzahl von Stellen nach- bzw. endbearbeitet wird, um Anlageflächen, Abstützflächen und Bohrungen, Löcher und Gewindebohrungen für die Anbringung der unterschiedlichsten Bauteile zu ermöglichen. Die beiden Multifunktionslagerschilde 16, 17 weisen jeweils innenseitig Anlageflächen und einen Vorsprung 89, 90 mit einer oberen Anlagefläche auf, mit welchen Anlageflächen sie beim Anbau an der Außenwand und am unteren Quersteg des jeweiligen Rahmen-Längsträgers 1 bzw. 2 zur Anlage gebracht und dann dort mittels einer größeren Anzahl von Schrauben befestigt werden. Die diesbezüglichen, in den Multifunktionslagerschilden 16, 17 sowie hierzu fluchtend in den Längsträgern 1, 2 ausgebildeten Schraubenlöcher sind mit 87 bzw. 88 bezeichnet Jeder an einem Multifunktionslagerschild 16, 17 gegebene Vorsprung 89 bzw. 90 weist vom, oben und hinten weitere Anlageflächen auf, die beim Anbau der Quertraverse 85 von deren jeweils entsprechend ausgebildetem Endabschnitt 91 bzw. 92 übergriffen und mit dort innenseitig gegebenen Flächen in Anlagekontakt gebracht werden. Zueinander fluchtende Schraubenlöcher 93 bzw. 94 in jedem Vorsprung 89 bzw. 90 und den Endabschnitten 91, 92 dienen zur Befestigung der Quertraverse 85 an den Multifunktionslagerschilden 16, 17. Die Quertraverse 85 selbst ist vorzugsweise durch ein Blechpreßteil mit - in Fahrzeuglängsrichtung gesehen - hutförmigem Querschnittsprofil und einem zwischen den Endabschnitten 91, 92 nach unten leicht durchgebogenen Mittelabschnitt 95 ausgebildet.

Die beiden Multifunktionslagerschilde 16, 17 dienen erfindungsgemäß als Halter, Stütz-, Lager- und Befestigungsorgan für wenigstens folgende Fahrzeugteile, nämlich
- die Verbundlenker-Vorderachse, wobei diese über ihre beiden Längslenker 4 bzw. 5 angelenkt wird, oder alternativ eine andere, blattgefederte Vorderachse, deren beide Blattfedern 96 jeweils mit ihrem vorderen Lagerauge 97 angelenkt werden,
- einen energieabsorbierenden Unterfahrschutz 98, der gleichzeitig den Unterbau für einen Stoßfänger bildet und als Träger für diesen, aber auch die beiden Enstiegkästen oder zumindest Teilen davon, wie z. B. die untersten Trittstufen 99, 100 fungieren kann,
- ein Lenkgetriebe 101 als Teil der Fahrzeugservolenkung,
- ein Kühler-/Lüfter-Aggregat 103,
- einen Rohrquerträger 104 oder 105, an dem im Bereich 106 ein Abschlepp-Fangmaul oder in Löchern 107, 108 zwei Abschlepphaken und/oder ein Geräteträger 109 befestigbar ist, an dem wiederum z. B. ein Schneepflug anflanschbar ist,
- einen Fahrerhauskippzylinder 110,
- die vordere Fahrerhauslager- und -federungseinrichtung 111, und
- gegebenenfalls auch noch eine automatische Motorölnachfülleinrichtung 102, eine Zusatzheizung für Motorvorwärmung, eine Zentralschmierpumpe, ein Kraftstoffilter und dergleichen Fahrzeugteile.

Die Anlenkstelle für einen der beiden Längslenker 4, 5 der Verbundlenker-Vorderachse oder wahlweise der beiden Blattfedern 96 einer anderen Vorderachse ist im von außen her freien Innenraum jedes Vorsprunges 89 bzw. 90 am Multifunktionslagerschild 16, 17 gegeben, und zwar in Form einer Anlagefläche und einer Querbohrung 112, in die bei Montage ein das vordere Längslenker-Lagerauge 26 bzw. 27 oder im blattgefederten Alternativfall das vordere Lagerauge 97 einer Blattfeder 96 durchdringender Lagerbolzen eingebaut wird. Anschließend wird jede dieser beiden Lagerstellen von außen her durch einen mittels mehrerer Schrauben 113 am Multifunktionslagerschild 16 bzw. 17 befestigten Deckel 114 gesichert. Eine dieser Schrauben 113 geht durch das Zentrum des Lagerbolzens sowie durch die Querbohrung 112 hindurch und dient auf einer Seite des Fahrzeugs auch zur gelenkigen Befestigung des unteren Endes 115 des hydraulischen Fahrerhauskippzylinders 110, der mit einem am anderen Ende seines Kolbens 116 angeordneten Lagerauge an einem am Fahrerhausboden befestigten Bock 117 angelenkt ist.

Der Unterfahrschutz 98 besteht aus einem im wesentlichen geraden Querrohr 118 mit nach hinten abgewinkelten Endbereichen 119, 120, an denen die Trittstufen 99, 100 oder auch die kompletten Fahrerhaus-Einstiegskästen oben befestigt werden. Das Querrohr 118 dient als Unterbau für einen Stoßfänger sowie als Halter für diesen oder zumindest von Teilen desselben. Am Querrohr 118 schließen sich axial nach hinten abragende, bei einem Aufprall axial nachgiebige Energieabsorber 121, 122 an. An deren hinteren Enden sind Anschlußböcke 123, 124 angeordnet, über die der Unterfahrschutz 98 samt aller angebauter Teile an den beiden Multifunktionslagerschilden 16, 17 befestigt wird, und zwar über die dortigen Schraubenlöcher 125, 126 durchdringende Schrauben.

Zu den Schraubenlöchern 125 bzw. 126 fluchten Schraubenlöcher im Anschlußflansch 127 der automatischen Motorölnachfülleinrichtung 102, so daß diese mittels der selben Schrauben, die auch zur Befestigung des Unterfahrschutzes 98 auf einer Seite dienen, von außen her an dem betreffenden Multifunktionslagerschilden 16 bzw. 17 befestigt wird.

Die Bohrungen 128 bzw. 129 in den Multifunktionslagerschilden 16 bzw. 17 dienen in erster Linie zur wahlweise links- oder rechtsseitig im Fahrzeug vorzunehmenden Befestigung des Lenkgetriebes 101, dessen Anschlußbock 130 zu den Bohrungen 128 bzw. 129 fluchtende Bohrungen 131 aufweist und über letztere durchdringende Schrauben am betreffenden Multifunktionslagerschild 16 bzw. 17 festgespannt wird. An dem diesen gegenüberliegenden Multifunktionslagerschild 16 bzw. 17 werden die nicht für die Befestigung des Lenkgetriebes 101 benötigten Bohrungen 128 bzw. 129 dann für die wahlweise Befestigung einer Motorzusatzheizung und/oder einer Zentralschmierpumpe und/oder eines Kraftstoffilters und/oder eines anderen Fahrzeugteils mittels Schrauben verwendet.

Das Kühler-/Lüfter-Aggregat 103 weist links- und rechtsseitig je einen vorspringenden Lagerbock 132, 133 auf, der an einer entsprechenden Anlagefläche 134 bzw. 135 am Multifunktionslagerschild 16 bzw. 17 abgestützt und dort auch mittels einer in ein Schraubenloch 136 bzw. 137 eingreifenden Schraube befestigt ist. In Anbaulage erstreckt sich das Kühler-/Lüfter-Aggregat 103 somit frei hängend quer zwischen den beiden Multifunktionslagerschilden 16, 17, sein Lüfter ist über der Quertraverse 85 angeordnet und taucht mit dem Lüftermantel in den abgesenkten Bereich des Quertraversen-Mittelabschnitts 95 ein.

An der jeweils vorderen Stirnseite der beiden Multifunktionslagerschilde 16 bzw. 17 ist wahlweise einer der Querträger 104, 105 anflanschbar, und zwar mittels zweier an seinen beiden Enden gegebenen Anschlußböcken 138, 139 bzw. 140, 141, die jeweils mehrere, im dargestellten Fall vier zu den Schraubenlöcher 142 bzw. 143 in den Multifunktionslagerschilden 16 bzw. 17 fluchtende Schraubenlöcher aufweisen und mittels einer entsprechenden Anzahl von Schrauben befestigt sind. Im Fall eines Querträgers 104, 105, an dem ein Abschlepp-Fangmaul oder ein Geräteträger 109 befestigt wird, ist vorgesehen, den jeweiligen Anschlußbock 138, 139 bzw. 140, 141 auch von der Innenseite her angeflanscht an den beiden Multifunktionslagerschilden 16 bzw. 17 zu befestigen, um die hohen Kräfte sicher übertragen zu können. Zur Festspannung mittels Schrauben sind hierzu die Querbohrungen 144 bzw. 145 in den Multifunktionslagerschilden 16 bzw. 17 vorgesehen.

Zwei dieser Querbohrungen 144 bzw. 145 und der diese durchdringender Schrauben für die Festspannung des Querträgers 104 bzw. 105 dienen auch zur Befestigung je eines Federbeinhalters 146 bzw. 147 außen an Anlageflächen am jeweiligen Multifunktionslagerschild 16 bzw. 17. Diese Federbeinhalter 146, 147 sind Bestandteil der Fahrerhauslager- und -federungseinrichtung 111. Jeder derselben lagert das untere Ende eines Feder-Dämpfer-Beines 148 bzw. 149, dessen oberes Ende wiederum an einer am Fahrerhausboden befestigten Lagerkonsole 150 bzw. 151 angelenkt ist. Beide Lagerkonsolen 150, 151 sind durch eine Querstabilisatorstange 152 und gegebenenfalls eine weitere, mit Abstand darüber angeordnete Querstange 153 fest miteinander verbunden. Die Lage des Fahrerhauses und der Feder-Dämpfer-Beine 148, 149 ist gegenüber dem Fahrgestell-Rahmen 1, 2 über die Querstabilisatorstange 152, die Querstange 153 und die beiden fest mit diesen Stangen verbundenen Lagerkonsolen 150, 151 durch zwei Längslenker 154 bzw. 155 stabilisiert, von denen jeder mit seinem vorderen Ende 156 bzw. 157 an einer Lagerkonsole 150 bzw. 151 in einem dortigen Maul und mit seinem hinteren Ende 158 bzw. 159 in einem Lagerbock 160 bzw. 161 gelagert ist. Jeder dieser beiden Lagerböcke 160, 161 ist an einem der beiden Multifunktionslagerschilde 16 bzw. 17 befestigt, und zwar mittels mehrerer Schrauben, die zueinander fluchtenden Querbohrungen 162 bzw. 163 in den Multifunktionslagerschilden 16 bzw. 17 und den seitlichen Wangen der Lagerböcke 160, 161 durchdringen und letztere über Muttern an entsprechenden Außen- und Innenflächen an den Multifunktionslagerschilden 16 bzw. 17 festspannen. Jeder der beiden Längslenker 154, 155 besteht aus einem stabförmigen Mittelteil, an dem die vorderen und hinteren Enden 156, 157 bzw. 158, 159 jeweils als Lageraugen ausgebildet ist. Das stabförmige Mittelteil jedes der beiden Längslenker 154, 155 ist vorzugsweise in Längsrichtung so stark bogenförmig nach oben oder unten durchgekrümmt ausgebildet, daß sich bei einem Frontalaufprall des Fahrzeugs auf ein Hindernis und entsprechender Krafteinwirkung von vom auf das Fahrerhaus und damit auch die Bauteile 152, 153, 150, 151 die Längslenker 154, 155 energieverzehrend gezielt im Sinne einer stärkeren Krümmung ihres stabförmigen Mittelteils verformen.

## Patentansprüche

1. Fahrgestell eines Frontlenker-Lastkraftwagen mit kippbarem Fahrerhaus, mit einem Rahmen, dessen beide Längsträger (1, 2) über mehrere Querträger miteinander verbunden sind, und mit einer starren Vorderachse, deren Starrachskörper (3) über Längslenker (4, 5) an rahmenfesten Stellen angelenkt ist, **dadurch gekennzeichnet, daß** die vorderen Enden der beiden Rahmenlängsträger (1, 2) durch einen - von vorne gesehen - im wesentlichen U-förmigen Querträger (86) miteinander verbunden sind, der sich aus zwei jeweils an einem Rahmenlängsträger (1, 2) angeflanscht befestigten Multifunktionslagerschilden (16, 17) und einer sich unten zwischen diesen erstreckenden, jeweils endseitig mit diesen verbundenen Quertraverse (85) zusammengesetzt, und daß die beiden Multifunktionslagerschilde (16, 17) als Halter, Stütz-, Lager- und Befestigungsorgan für eine Anzahl verschiedener Fahrzeugteile fungieren, nämlich für
- die Vorderachse durch jeweils wahlweise Anlenkung eines achsführenden Längslenkers (4, 5) oder einer Blattfeder (96) an einer Anlenkstelle,
- Teile der vorderen Fahrerhauslager- und -federungseinrichtung (111),
- einen Fahrerhauskippzylinder (110),
- ein Lenkgetriebe (101) als Teil der Vorderachsservolenkung,
- ein Kühler-/Lüfter-Aggregat (103),
- einen Unterfahrschutz (98), der gleichzeitig den Unterbau für einen Stoßfänger bildet und als Träger für diesen, aber auch die beiden Einstiegskästen oder zumindest Teile davon fungiert,
- einen Rohrquerträger zur wahlweisen Anbringung von Abschlepporganen oder eines Geräteträgers, und
- gegebenenfalls weiterer Fahrzeugteile, wie eine automatische Motorölnachfüllvorrichtung (102), eine Zusatzheizung für Motorvorwärmung, eine Zentralschmierpumpe, einen Kraftstoffilter und dergleichen.

2. Fahrgestell nach Anspruch 1, **dadurch gekennzeichnet, daß** jeder der beiden Multifunktionslagerschilde (16, 17) durch ein einstückiges Guß- oder Schmiedeteil gebildet ist, das nach dem Ausformen an einer Vielzahl von Stellen nach- bzw. endbearbeitet wird, um Anlageflächen, Abstützflächen, Bohrungen, Löcher und Gewindebohrungen für die Anbringung der verschiedenen Bauteile bereitzustellen.

3. Fahrgestell nach Anspruch 1, **dadurch gekennzeichnet, daß** jeder der beiden Multifunktionslagerschilde (16, 17) innenseitig Anlageflächen und einen Vorsprung (89, 90) mit einer oberen Anlagefläche aufweist, mit welchen Anlageflächen er beim Anbau an einem Rahmenlängsträger (1, 2) an dessen Außenwand und unterem Quersteg zur Anlage gebracht und mittels einer größeren Anzahl von Schrauben angeflanscht befestigt wird, wobei zur Durchführung der Schrauben in den Multifunktionslagerschilden (16, 17) und den Längsträgern (1, 2) zueinander fluchtende Schraubenlöcher (87, 88) vorgesehen sind.

4. Fahrgestell nach Anspruch 3, **dadurch gekennzeichnet, daß** jeder innenseitig an einem Multifunktionslagerschild (16, 17) angeordnete Vorsprung (89, 90) vorn, oben und hinten weitere Anlageflächen aufweist, die beim Anbau der Quertraverse (85) von deren jeweils entsprechend ausgebildetem Endabschnitt (91, 92) übergriffen werden, derart, daß in deren Bereich gegebene innere Anlageflächen an den vorsprungseitigen Anlageflächen zur Anlage kommen und die Quertraverse (85) dort mittels in ihren Endabschnitten (91, 92) und jedem Vorsprung (89, 90) zueinander fluchtende Schraubenlöcher (93, 94) durchgreifende Schrauben befestigbar ist.

5. Fahrgestell nach einem der Ansprüche 1 und 4, **dadurch gekennzeichnet, daß** die Quertraverse (85) des Querträgers (86) durch ein Blechpreßteil mit einem
- in Fahrzeuglängsrichtung gesehen - hutförmigen Querschnittsprofil und einem zwischen den Endabschnitten (91, 92) nach unten leicht durchgebogenen Mittelabschnitt (95) gebildet ist, über dem nach Anbau des Kühler-/Lüfter-Aggregates (103) an die beiden Multifunktionslagerschilde (16, 17) der Lüfter angeordnet ist und mit seinem Mantel in den bogenförmig abgesenkten Bereich eintaucht.

6. Fahrgestell nach Anspruch 4, **dadurch gekennzeichnet, daß** die Anlenkstelle für einen der beiden achsführenden Längslenker (4, 5) oder wahlweise einer der beiden Blattfedern (96) im von außen her freien Innenraum des Vorsprungs (89, 90) am jeweiligen Multifunktionslagerschild (16, 17) gegeben ist, und zwar in Form einer Anlagefläche und einer Querbohrung (112), in die bei Montage ein das vordere Lagerauge (26, 27) des Längslenkers (4, 5) oder im blattgefederten Alternativfall das vordere Lagerauge (97) einer Blattfeder (96) durchdringender Lagerbolzen eingebaut wird, und daß jede dieser beiden Lagerstellen von außen her durch einen mittels mehrerer Schrauben (113) am jeweiligen Multifunktionslagerschild (16, 17) befestigten Deckel (114) gesichert ist.

7. Fahrgestell nach Anspruch 6, **dadurch gekennzeichnet, daß** eine der zur Befestigung des Deckels (114) dienenden Schrauben (113) durch das Zentrum des Lagerbolzens sowie eine Querbohrung (112) im Multifunktionslagerschild (16, 17) hindurchgeht und auf einer Seite des Fahrzeugs auch zur gelenkigen Befestigung des unteren Endes (115) des hydraulischen Fahrerhauskippzylinder (110) herangezogen ist, der mit einem am anderen Ende seines Kolbens (116) angeordneten Lagerauge an einem am Fahrerhausboden befestigten Bock (117) angelenkt ist

8. Fahrgestell nach Anspruch 1, **dadurch gekennzeichnet, daß** der Unterfahrschutz (98) aus einem im wesentlichen geraden Querrohr (118) mit nach hinten abgewinkelten Endbereichen (119, 120) besteht, an denen die Trittstufen (99, 100) oder auch die kompletten Fahrerhaus-Einstiegskästen befestigt sind, daß sich an dem als Unterbau für den Stoßfänger sowie als Halter für diesen oder zumindest Teile desselben dienenden Querrohr (118) als Tragarme nach hinten abragende, bei einem Aufprall axial nachgiebige Energieabsorber (121, 122) anschließen, an deren hinteren Enden Anschlußböcke (123, 124) angeordnet sind, über die der Unterfahrschutz (98) samt aller angebauten Teile an den beiden Multifunktionslagerschilden (16, 17) über dortige Schraubenlöcher (125, 126) durchdringende Schrauben befestigbar ist.

9. Fahrgestell nach Anspruch 1, **dadurch gekennzeichnet, daß** in jedem Multifunktionslagerschild (16, 17) Bohrungen (128, 129) für die wahlweise links- oder rechtsseitig im Fahrzeug vorzunehmende Befestigung des Lenkgetriebes (101) vorgesehen sind, dessen Anschlußbock (130) zu den Bohrungen (128, 129) fluchtende Bohrungen (131) aufweist und über letztere durchdringende Schrauben am betreffenden Multifunktionslagerschild (16, 17) festgespannt ist, und daß an dem diesen gegenüberliegenden Multifunktionslagerschild die nicht zur Befestigung des Lenkgetriebes benötigten Bohrungen (128, 129) für die wahlweise Befestigung einer Motorzusatzheizung und/oder einer Zentralschmierpumpe und/oder eines Kraftstoffilters und/oder eines anderen Fahrzeugteils mittels Schrauben verwendet sind.

10. Fahrgestell nach Anspruch 1, **dadurch gekennzeichnet, daß** an den beiden Multifunktionslagerschilden (16, 17) oben Anlageflächen (134, 135) und in deren Bereich Schraubenlöcher (136, 137) vorgesehen sind, auf welchen Anlageflächen (134, 135) am Kühler-/Lüfter-Aggregat (103) links- und rechtsseitig angeordnete Lagerböcke (132, 133) aufgelagert und dort mittels die Schraubenlöcher (136, 137) sowie hierzu in den Lagerböcken (132, 133) fluchtende Schraubenlöcher durchdringender Schrauben befestigt sind, so daß das Kühler-/Lüfter-Aggregat (103) sich in Anbaulage frei hängend quer zwischen den beiden Multifunktionslagerschilden (16, 17) erstreckt

11. Fahrgestell nach Anspruch 1, **dadurch gekennzeichnet, daß** an den vorderen Stirnseiten der beiden Multifunktionslagerschilde (16, 17) Anlageflächen und mehrere Längsbohrungen (142, 143) für das Anflanschen und Befestigen eines Querträgers (104, 105) mittels Schrauben vorgesehen sind.

12. Fahrgestell nach Anspruch 1, **dadurch gekennzeichnet, daß** an jedem der beiden Multifunktionslagerschilde (16, 17) eine Anzahl von Schraubenlöchern (144, 145, 162, 163) und Anlageflächen für die Befestigung verschiedener Teile der vorderen Fahrerhauslager- und -federungseinrichtung (111) vorgesehen sind, nämlich für
- zwei Federbeinhalter (146, 147), von denen jeder das untere Ende eines Feder-Dämpfer-Beines (148, 149) lagert, dessen oberes Ende an einer am Fahrerhausboden befestigten Lagerkonsole (150, 151) angelenkt ist,
- zwei Lagerböcke (160, 161), an denen jeweils mit ihren hinteren Enden Längslenker (154, 155) angelenkt sind, an deren vorderen Enden (156, 157) die beiden über wenigstens eine Querstange (152, 153) miteinander verbundenen Lagerkonsolen (150, 151) angelenkt sind.

13. Fahrgestell nach Anspruch 1, **dadurch gekennzeichnet, daß** die Vorderachse nach Art einer selbststabilisierenden Verbundlenkerachse ausgebildet ist, demzufolge die Funktion eines das Wanken des Lastkraftwagens begrenzenden Stabilisators einem Bauteilverbund aufgeprägt ist, der aus dem Starrachskörper (3) und den beiden fest an diesem angeschlossenen Längslenkern (4, 5) besteht, wobei
- die beiden Längslenker (4, 5) weit voneinander beabstandet jeweils stirnseitig am Starrachskörper mittels Schrauben (25) kraft- und gegebenenfalls auch formschlüssig angeflanscht sind,
- der Starrachskörper (3) in einem geraden Mittelbereich zwischen den angeschlossenen Längslenkern (4, 5) definiert torsionsfähig ausgebildet ist,
- die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torisionsfähigkeit auf den Gesamtstabilisierungseffekt in Verbindung mit dem torisionsfähigen Starrachskörper (3) abgestimmt sind durch entsprechende Bemessung und Formgebung der hierfür maßgeblichen Querschnitte,
- diese Verbundlenker-Vorderachse mit den freien Enden ihrer beiden Längslenker (4, 5) an den beiden Multifunktionslagerschilden (16, 17) angelenkt ist,
- zur Querführung dieser Verbundlenker-Vorderachse ein Panhardstab (15) vorgesehen ist, der einenendes am Starrachskörper-Längslenker-Verbund und andernendes mittelbar am Rahmen angelenkt ist,
- je Achsseite ist ein aus einer Luft- oder Schraubenfeder (7, 10) und einem hierzu koaxialen Stoßdämpfer (8, 11) bestehendes Federbein (6, 9) vorgesehen ist, wovon jedes unten am Starrachskörper (3) angelenkt und oben an einem fest an einem Rahmenlängsträger (1, 2) angeschlossenen Federbeinhalter (12, 13) befestigt ist.

## Claims

1. Chassis of a forward-control truck with a tiltable cab, with a frame whose two longitudinal members (1, 2) are connected with each other by means of several cross members, and with a rigid front axle whose rigid axle body (3) is located via longitudinal arms (4, 5) on points firmly attached to the frame, **characterised in that** the front ends of the two frame longitudinal members (1, 2) are connected with each other by means of a cross member (86) which, if viewed from the front, is essentially U-shaped and composed of two multi-function bearing plates (16, 17), each of which is flanged on to a frame longitudinal member (1, 2), and of a transverse beam (85) which extends below said multi-function bearing plates (16, 17) and is, with each of its ends, connected with these multi-function bearing plates (16, 17) and that the two multi-function bearing plates (16, 17) act as holding, supporting, bearing and fastening organs for a number of different vehicle parts, namely for
• the front axle by means of the optional location of an axle-locating longitudinal arm (4, 5) or of a leaf spring (96) at a locating point,
• parts for the front cab mounts and suspension devices (111),
• a cab tilting cylinder (110),
• a steering gear (101) as part of the front-axle power steering system,
• a radiator/fan unit (103),
• an underride guard (98), which at the same time serves as the substructure for a bumper and acts as a support for said bumper but also for the two entry boxes or at least for parts thereof,
• a tubular cross member for the optional attachment of towing organs or of an equipment support, and,
• further vehicle parts, if fitted, eg an automatic engine oil replenisher (102), an auxiliary heater for engine preheating, a central lubrication pump, a fuel filter etc.

2. Chassis according to Claim 1, **characterised in that** each of the two multi-function bearing plates (16, 17) is formed by a one-piece cast or forged part, which after forming is finished at a large number of points to provide contact and support faces, bores, holes and threaded bores for attachment of the various components.

3. Chassis according to Claim 1, **characterised in that** each of the two multi-function bearing plates (16, 17) is provided with contact faces on the inside and with protrusions (89, 90) with an upper contact face, with which contact faces each of said multi-function bearing plates (16, 17), when attached to a frame longitudinal member (1, 2), is placed against the outer wall and the lower cross web of said frame longitudinal member (1, 2), flanged on and fastened by means of a large number of bolts, whereby for the passing through of said bolts bolt holes (87, 88) are provided in the multi-function bearing plates (16, 17) and in the longitudinal members (1, 2) and aligned to one another.

4. Chassis according to Claim 3, **characterised in that** each of the protrusions (89, 90) provided on the inside of a multi-function bearing plate (16, 17) is, at the front, top and rear, fitted with further contact faces which in the attachment of the transverse beam (85) are covered by each of the suitably designed end sections (91, 92) of said transverse beam (85) in such a way that the inner contact faces in the area of said end sections (91, 92) are placed on the contact faces on said protrusions (89, 90) and the transverse beam (85) can be fastened there by means of bolts passed through bolt holes (93, 94) which are provided in the end sections (91, 92) of said transverse beam (85) and in each of the protrusions (89, 90) and are aligned to one another.

5. Chassis according to one of the Claims 1 and 4, **characterised in that** the transverse beam (85) of the cross member (86) is a pressed sheet-metal part with - if viewed in vehicle longitudinal direction - a hat-shaped cross-section profile and a slightly downward-curved centre section between the end sections (91, 92), above which pressed sheet-metal part, after attachment of the radiator/fan unit (103) to the two multi-function bearing plates (16, 17), the fan is placed and dips into the downward-curved area with its jacket.

6. Chassis according to Claim 4, **characterised in that** the location point for one of the two axle-locating longitudinal control arms (4, 5) or, alternatively, for one of the two leaf springs (96) is provided in the free interior of the protrusion (89, 90) on each of the multi-function bearing plates (16, 17) and in the form of a contact face and a transverse bore (112) in which for assembly purposes a bearing pin is installed which passes through the front bearing eye (26, 27) of the longitudinal control arm (4, 5) or, alternatively, if a leaf spring is fitted, through the front bearing eye (97) of a leaf spring (96) and that each of these two bearing points is secured from the outside by means of a cover (114) fastened to each of the multi-function bearing plates (16, 17) with the aid of several bolts (113).

7. Chassis according to Claim 6, **characterised in that** one of the bolts (113) for fastening the cover (114) passes through the centre of the bearing pin and through a transverse bore (112) in the multi-function bearing plate (16, 17) and is, on one side of the vehicle, used also for articulated attachment of the lower end (115) of the hydraulic cab tilting cylinder (110) which with a bearing eye arranged at the other end of its piston (116) is located on a mount (117) fastened to the cab floor.

8. Chassis according to Claim 1, **characterised in that** the underride guard (98) consists. of an essentially straight transverse tube (118) with rearward-angled end areas (119, 120) to which the steps (99, 100) or also the complete cab entry boxes are attached, that energy absorbers (121, 122) which serve as support arms, point towards the rear and yield axially upon impact are immediately adjacent to said transverse tube (118) serving as a substructure for the shock absorber and as a holder for it or at least for parts of it and that at the rear ends of said energy absorbers (121, 122) connecting blocks (123, 124) are arranged, via which the underride guard (98) with all attached parts can be fastened to the multi-function bearing plates (16, 17) by means of bolts passing through bolt holes (125, 126) provided there.

9. Chassis according to Claim 1, **characterised in that** each multi-function bearing plate (16, 17) is provided with bores (128, 129) for attachment of the steering gear (101) to either the left or the right-hand side on board the vehicle, the connecting block (130) of said steering gear (101) has bores (131) aligned to said bores (128, 129) and is fastened to the relevant multi-function bearing plate (16, 17) by means of bolts passing through said bores (128, 129), and that on the multi-function bearing plate (16, 17) facing said bores (128, 129) the bores (128, 129) not required for attachment of the steering gear are used for the optional attachment of an engine auxiliary heater and/or a central lubrication pump and/or a fuel filter and/or another vehicle part by means of bolts.

10. Chassis according to Claim 1, **characterised in that** the top side of the two multi-function bearing plates (16, 17) have contact faces (134, 135) with bolt holes (136, 137), on which contact faces (134, 135) bearing mounts (132, 133) fitted to the left and right-hand sides of the radiator/fan unit (103) are placed and fastened there by means of bolts passing through the bolt holes (136, 137) and through bolt holes which are provided in the bearing mounts (132, 133) and aligned to said bolt holes (136, 137), so that in attachment position the radiator/fan unit (103) is freely suspended and extends between the two multi-function bearing plates (16, 17).

11. Chassis according to Claim 1, **characterised in that** the front end faces of the two multi-function bearing plates (16, 17) have contact faces and several longitudinal bores (142, 143) for flanging on and fastening a cross member (104, 105) by means of bolts.

12. Chassis according to Claim 1, **characterised in that** each of the two multi-function bearing plates (16, 17) is provided with a number of bolt holes (144, 145, 162, 163) and contact faces for fastening various parts of the front cab mounts and suspension system (11), namely for
• two spring-strut holders (146, 147), each of which supports the lower end of a spring-damper strut (148, 149) whose upper end is located on a bearing console (150, 151) fitted to the cab floor,
• two bearing mounts (160, 161), on each of which the rear ends of longitudinal arms (154, 155) are located, on the front ends (156, 157) of which longitudinal arms (154, 155) the two bearing consoles (150, 151) connected with each other by at least one transverse bar (152, 153) are located.

13. Chassis according to Claim 1, **characterised in that** the front axle is designed as a self-stabilising twist-beam axle, which makes limiting the truck's rolling motion the inherent function of a component assembly consisting of a rigid-axle body (3) and of the two longitudinal arms (4, 5) firmly linked to said rigid-axle body (3),
• the two longitudinal arms (4, 5) being spaced a large distance apart and the front face of each of them being flanged on to the rigid-axle body in a non-positive and, if necessary, in a positive connection by means of bolts (25),
• the rigid-axle body (3) being defined as being torsion-capable in a straight centre area between the two longitudinal arms (4,5) connected up,
• the two longitudinal arms (4, 5), if viewed in vertical direction, being designed as having comparative flexural resistance but limited torsional capability about the longitudinal axis and, in respect of their flexural resistance and torsional capability, being adapted to the overall stabilising effect in conjunction with the torsion-capable rigid-axle body (3) through the suitable dimensioning and forming of the cross-sections decisive for this,
• this twist-beam front axle being located on the two multi-function bearing plates (16, 17) with the free ends of its two longitudinal arms (4, 5),
• a panhard rod (15) being provided for transverse location of this twist-beam front axle, which panhard rod (15) is, with its one end, located on the rigid-axle-body/longitudinal-arm assembly and, with its other end, indirectly on the frame,
• a spring strut (6, 9) provided on each axle side and consisting of an air or coil spring (7, 10) and of a shock absorber (8, 11) arranged coaxially to said air or coil spring (7, 10), the lower end of each spring strut (6, 9) being located on the rigid axle body (3) and the upper end of each spring strut (6, 9) being fastened to spring-strut holder (12, 13) firmly connected up to frame longitudinal member (1, 2).

## Revendications

1. Châssis d'un camion à cabine avancée basculante comportant un châssis dont les deux longerons (1, 2) sont reliés par plusieurs poutres transversales, et un essieu avant rigide dont le corps d'essieu rigide (3) est articulé en des points solidaires du châssis par des bras longitudinaux (4, 5),
**caractérisé en ce que**
les extrémités avant des deux longerons (1, 2) du châssis sont reliées par une poutre transversale (86) ayant en vue de devant une forme essentiellement en U, cette poutre étant formée de chaque fois deux panneaux de paliers multifonctions (16, 17) fixés à l'un des longerons de châssis (1, 2) et d'une traverse (85) s'étendant sous les panneaux de paliers en étant reliée à ceux-ci chaque fois par l'extrémité, et
les deux panneaux de paliers multifonctions (16, 17) servent de moyens de fixation de supports de paliers et de réception pour un certain nombre de composants différents du véhicule, à savoir :
- l'essieu avant par une articulation chaque fois au choix d'un bras longitudinal (4, 5) guidant l'essieu ou d'un ressort lame (96) à un point d'articulation,
- les parties de l'installation de débattement et de suspension de cabine (111), avant,
- un vérin de basculement de cabine (110),
- une transmission de direction (101) comme faisant partie de la direction assistée de l'essieu avant,
- un ensemble radiateur/ventilateur (103),
- une protection basse (98) qui forme en même temps l'infrastructure pour un absorbeur de chocs et de support à celui-cl mais forme également un support pour les deux caissons de marchepied ou du moins des parties de ceux-ci,
- un support transversal tubulaire pour installer au choix des organes de traction ou un porte-outil,
- le cas échéant d'autres parties de véhicule comme un dispositif de remplissage automatique d'huile (102), un chauffage complémentaire pour préchauffer le moteur, une pompe de graissage centrale, un filtre à carburant ou analogue.

2. Châssis selon la revendication 1,
**caractérisé en ce que**
chacun des panneaux de paliers multifonctions (16, 17) est formé d'une seule pièce coulée ou forgée qui, après la mise en forme, est usinée en un grand nombre d'endroits pour former des surfaces d'appui de supports, des perçages, des trous, des taraudages, pour installer différents composants.

3. Châssis selon la revendication 1,
**caractérisé en ce que**
chacun des deux panneaux de paliers multifonctions (16, 17) comporte d'un côté des surfaces d'appui et une partie en saillie (89, 90) avec une surface d'appui supérieure et par ces surfaces d'appui, lors du montage sur un longeron (1, 2) du châssis, le panneau de palier multifonctions est mis en appui contre la paroi extérieure et/ou la branche inférieure du longeron et est fixé à l'aide d'un grand nombre de vis, et le passage des vis dans le panneau de palier multifonctions (16, 17) et les supports longitudinaux (1, 2) comportant des perçages à vis alignés (87, 88).

4. Châssis selon la revendication 3,
**caractérisé en ce que**
chacune des parties en saillie (89, 90), prévue du côté intérieur sur le panneau de palier multifonctions (16, 17), présente d'autres surfaces d'appui devant, au-dessus et derrière qui, lors du montage de la traverse (85), sont chevauchées par un segment d'extrémité (91, 92) de forme correspondante, de façon que des surfaces d'appui intérieures viennent dans leur zone contre les surfaces d'appui en saillie et permettent de fixer la traverse (85) à l'aide de vis traversant des trous de vis (93, 94) alignés dans chaque partie en saillie (89, 90) et leurs segments d'extrémité (91, 92).

5. Chàssis selon l'une quelconque des revendication 1 et 4.
**caractérisé en ce que**
la traverse (85) de la poutre transversale (86) est formée par une pièce en tôle emboutie, ayant un profil de section en forme de chapeau (vu dans la direction longitudinale du véhicule) et un segment central (95) légèrement cintré vers le bas entre les segments d'extrémité (91, 92), sur lequel après le montage de l'ensemble radiateur/ventilateur (103) sur les deux panneaux de paliers multifonctions (16, 17), se trouve installé le ventilateur avec son enveloppe noyée dans la zone abaissée, avec un tracé courbe.

6. Châssis selon la revendication 4,
**caractérisé en ce que**
les points d'articulation de l'un des deux bras longitudinaux (4, 5) guidant l'essieu ou au choix de l'un des deux ressorts lames (96) est prévu dans l'espace intérieur libre à partir de l'extérieur de la partie en saillie (89, 90) du panneau de palier multifonctions (16, 17) respectif, et cela sous la forme d'une surface d'appui et d'un perçage transversal (112) dans lequel au montage pénètre un goujon de palier qui traverse l'oeillet de palier avant (26, 27) du bras longitudinal (4, 5) ou, en variante, l'oeillet de palier avant (97) du ressort lame (96) dans le cas du montage à ressort lame, et **en ce que** chacun des deux points de palier est protégé de l'extérieur par un couvercle (114) fixé à l'aide de plusieurs vis (113) à chaque panneau de paliers multifonctions (16, 17).

7. Châssis selon la revendication 6,
**caractérisé en ce que**
l'une des vis (113) servant à la fixation du couvercle (114) traverse le centre du goujon de palier ainsi qu'un perçage transversal (112) du panneau de palier multifonctions (16, 17) et arrive d'un côté du véhicule également par la fixation articulée de l'extrémité inférieure (115) du vérin hydraulique de basculement de cabine (110) dont l'oeillet de palier, prévu à l'autre extrémité de son piston (116), est articulé à un bloc (117) fixé au plancher de la cabine.

8. Châssis selon la revendication 1,
**caractérisé en ce que**
la protection basse (98) se compose principalement d'un tube transversal droit (118) avec des zones d'extrémité (119, 120) recourbées vers l'arrière et auxquelles se fixent les marches d'accès (99, 100) ou l'ensemble du caisson d'accès à la cabine, sur le tube transversal (118) servant d'infrastructure pour les absorbeurs de chocs et de support pour ceux-ci ou au moins des parties de ceux-ci, se raccordent sous forme de bras de support en saillie vers l'arrière des absorbeurs d'énergie (121, 122) axialement souples, en cas de choc dont les extrémités arrière comportent des blocs de raccordement (123, 124) par lesquels la protection basse (98) ainsi que tous les composants installés sur l'un des deux panneaux de paliers multifonctions (16, 17) sont fixés par des vis traversant des trous de vis (125, 126) prévus à cet effet.

9. Châssis selon la revendication 1,
**caractérisé en ce que**
chaque panneau de palier multifonctions (16, 17) comporte des perçages (128, 129) pour fixer au choix du côté gauche ou du côté droit du véhicule, la transmission de direction (101) dont le bloc de raccordement (130) comporte des perçages (131) alignés sur les perçages (128, 129) et est serré. Sur le panneau de palier multifonctions (16, 17) correspondant par des vis passées dans les perçages, et
les perçages (128, 129) non utilisés dans le panneau de palier multifonctions opposé pour la fixation de la transmission de direction, sont utilisés pour la fixation l'aide de vis au choix d'un chauffage complémentaire du moteur et/ou d'une pompe de graissage, centrale, et/ou d'un filtre à carburant et/ou d'une autre partie de véhicule.

10. Châssis selon la revendication 1,
**caractérisé en ce que**
les deux panneaux de paliers multifonctions (16, 17) ont en haut des surfaces d'appui (134, 135) et au niveau de celles-ci, des trous de vis (136, 137) recevant sur les surfaces d'appui (134, 135) des blocs de palier (132, 133) prévus à gauche et à droite de l'ensemble radiateur/ventilateur (103) en y étant fiés à l'aide de vis traversant les trous de vis correspondants (136, 137) et ceux alignés dans les blocs de palier (132, 133) de sorte que l'ensemble radiateur/ventilateur (103) soit suspendu librement en position de montage transversalement entre les deux panneaux de paliers multifonctions (16, 17).

11. Châssis selon la revendication 1,
**caractérisé en ce que**
les faces frontales des deux panneaux de paliers multifonctions (16, 17) comportent des surfaces d'appui et plusieurs perçages longitudinaux (142, 143) pour relier par bride et fixer une poutre transversale (104, 105) à l'aide de vis.

12. Chàssis selon la revendication 1.
**caractérisé en ce que**
chacun des deux panneaux de paliers multifonctions (16, 17) comporte un certain nombre de trous de vis (144, 145, 162, 163) et de surfaces d'appui pour la fixation des différentes pièces de l'installation de débattement et de suspension avant de la cabine (111), à savoir :
- pour deux supports de jambe à ressort (146, 147) dont chacun reçoit l'extrémité inférieure d'une jambe à ressort et amortisseur (148, 149) dont l'extrémité supérieure est articulée à une console de palier (150, 151) fixée au plancher de la cabine,
- deux blocs paliers (160, 161) auxquels sont articulés chaque fois les bras longitudinaux (154, 155) par leur extrémité arrière, les extrémités avant (156, 157) étant articulées aux deux consoles de palier (150, 151) reliées par au moins une traverse (152, 153).

13. Châssis selon la revendication 1,
**caractérisé en ce que**
l'essieu avant est réalisé sous la forme d'un essieu de direction, composite, autostabilisant, ayant la fonction d'une pièce composite de stabilisateur limitant le basculement du camion et qui se compose du corps d'essieu rigide (3) et des deux bras longitudinaux (4, 5) reliés à celui-ci.
- les deux bras longitudinaux (4, 5) étant fixés de manière écartée chaque fois du côté frontal sur le corps d'essieu rigide à l'aide de vis. par une liaison par la force et le cas échéant par la forme,
- le corps d'essieu rigide (3) est réalisé dans une zone médiane droite entre les bras longitudinaux (4, 5), raccordés, de manière définie, résistants en torsion,
- les deux bras longitudinaux (4, 5) sont relativement rigides en friction dans la direction verticale pour pouvoir subir une torsion autour de leur axe longitudinal, de façon limitée, et du point de vue de leur rigidité en flexion et de leur résistance en torsion ils sont définis suivent l'effet de stabilisation globale en combinaison avec le corps d'essieu rigide (3) résistant en torsion par un dtmensionnement approprié et une mise en forme des sections déterminantes à cet effet,
- cet essieu avant-bras composite est articulé avec les extrémités libres des deux bras longitudinaux (4, 5) sur les deux paliers multifonctions (16, 17),
- pour le guidage transversal l'essieu avant-bras composite il est prévu une barre Panhard (15) dont une extrémité est articulée à l'ensemble corps d'essieu rigide-bras longitudinal et l'autre extrémité est reliée au châssis,
- de chaque côté de l'essieu il est prévu une jambe à ressort (6, 9) formée d'un ressort pneumatique ou hélicoïdal (7, 10) et d'un amortisseur (8, 11), coaxial, et chacune des jambes à ressort est articulée en bas au corps d'essieu rigide (3) et en haut à un support de Jambe à ressort (12, 13) relié rigidement à un longeron (1, 2) du châssis.
